# EUROPEAN PATENT APPLICATION

(11) **EP 4 780 026 A1**
(43) Date of publication of application: **22.07.2026**
(21) Application number: 24870380.3
(22) Date of filing: 04.09.2024
(51) Int. Cl.: H04W 4/46, H04W 24/02

(54) **COMMUNICATION METHOD AND APPARATUS**

(30) Priority: 28.09.2023 CN 202311289666
(71) Applicant: HUAWEI TECHNOLOGIES CO., LTD., Shenzhen 518129 (CN)
(72) Inventor: LI, Xiangyu, Shenzhen, Guangdong 518129 (CN); PENG, Wenjie, Shenzhen, Guangdong 518129 (CN); CAI, Tao, Shenzhen, Guangdong 518129 (CN)
(74) Representative: Pfenning, Meinig & Partner mbB
(86) International application number: PCT/CN2024/116922
(87) International publication number: WO 2025/066834

(57) **Abstract**

A communication method and an apparatus are provided, including: A terminal reports backward compatibility information of a quality of service flow to an access network device; and the access network device determines an SLRB configuration based on the backward compatibility information that is of the quality of service flow and that is reported by the terminal, and sends the SLRB configuration to the terminal. When an SLRB is configured for the terminal, backward compatibility information of different quality of service flows is considered. For example, a plurality of quality of service flows with same backward compatibility may be configured to be mapped to one SLRB, to improve SL communication quality.

## Description

### CROSS-REFERENCE TO RELATED APPLICATIONS

This application claims priority to Chinese Patent Application No. 202311289666.9, filed with the China National Intellectual Property Administration on September 28, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and an apparatus.

### BACKGROUND

In wireless communication systems, two terminals can directly communicate with each other without a network device. A link between terminals is referred to as sidelink (sidelink, SL). A typical application scenario of SL communication is vehicle-to-everything (vehicle-to-everything, V2X). In the vehicle-to-everything scenario, each vehicle may be considered as a terminal, and vehicles can directly exchange data with each other without a network device. This can effectively reduce communication latency. How an access network device configures sidelink radio bearers (sidelink radio bearer, SLRB) for terminals to perform communication is a research direction.

### SUMMARY

Embodiments of this application provide a communication method and an apparatus, to configure an SLRB for a terminal.

According to a first aspect, a communication method is provided. The method is performed by a terminal or a module (for example, a chip or a circuit) in the terminal. The method includes: sending first indication information, where the first indication information indicates backward compatibility information of a first quality of service flow; and receiving configuration information of a first sidelink radio bearer SLRB, where the configuration information of the first SLRB is associated with the first quality of service flow, and the configuration information of the first SLRB is determined based on the backward compatibility information of the first quality of service flow.

In the foregoing design, the terminal determines, on a per QoS flow basis, whether each quality of service flow needs backward compatibility, and reports, to an access network device, whether each quality of service flow needs backward compatibility, so that the access network device can consider backward compatibility of different quality of service flows when configuring a mapping relationship between a quality of service flow and an SLRB. For example, the access network device may configure quality of service flows with same backward compatibility to be mapped to one SLRB, to avoid configuring quality of service flow with different backward compatibility to be mapped to one SLRB. This ensures that a backward compatibility requirement indicated by an upper layer is met when SL data transmission is performed at an AS, and SL communication quality is improved.

In a design, the configuration information of the first SLRB includes second indication information, and the second indication information indicates backward compatibility information of the first SLRB.

In a design, the method further includes: determining backward compatibility information of the first SLRB based on the backward compatibility information of the first quality of service flow.

In a design, before the sending first indication information, the method further includes: determining the first indication information based on a transmission profile of the first quality of service flow, where the transmission profile of the first quality of service flow indicates the backward compatibility information of the first quality of service flow.

In a design, the method further includes: obtaining the transmission profile of the first quality of service flow from an upper layer.

In a design, the backward compatibility information indicates that backward compatibility is needed or backward compatibility is not needed.

According to a second aspect, a peer method of the first aspect is provided. For beneficial effects, refer to the descriptions of the first aspect. A communication method is provided. The method is performed by an access network device, or a module (for example, a chip or a circuit) in the access network device, or all or a part of logical nodes, logical modules, or software that implement a function of the access network device. The method includes: receiving first indication information, where the first indication information indicates backward compatibility information of a first quality of service flow; determining configuration information of a first sidelink radio bearer SLRB based on the backward compatibility information of the first quality of service flow, where the configuration information of the first SLRB is associated with the first quality of service flow; and sending the configuration information of the first SLRB.

In a design, the configuration information of the first SLRB includes second indication information, and the second indication information indicates backward compatibility information of the first SLRB.

In a design, backward compatibility information of the first SLRB is determined based on the backward compatibility information of the first quality of service flow.

In a design, the first indication information is determined based on a transmission profile of the first quality of service flow, and the transmission profile of the first quality of service flow indicates the backward compatibility information of the first quality of service flow.

In a design, the transmission profile of the first quality of service flow is obtained from an upper layer.

In a design, the backward compatibility information indicates that backward compatibility is needed or backward compatibility is not needed.

According to a third aspect, a communication method is provided. The method is performed by a terminal or a module (for example, a chip or a circuit) in the terminal. The method includes: determining a first carrier based on backward compatibility information of a first quality of service flow; sending first indication information, where the first indication information indicates the first carrier; and receiving configuration information of a first sidelink radio bearer SLRB, where the configuration information of the first SLRB is associated with the first quality of service flow, and the configuration information of the first SLRB is determined based on the first carrier.

According to the foregoing design, the terminal reports, to an access network device on a per QoS flow basis, carrier information corresponding to each quality of service flow. The access network device configures carrier information of an SLRB for the terminal based on the carrier information corresponding to each quality of service flow, to avoid a case in which a carrier configured for the SLRB is not supported by a quality of service flow that has an association or a mapping relationship with the SLRB, to ensure that a backward compatibility requirement of the quality of service flow can be ensured in transmission at an AS layer, to improve SL communication quality.

In a design, the first quality of service flow includes one or more quality of service flows, and the determining the first carrier based on the backward compatibility information of the first quality of service flow includes: If backward compatibility information of one quality of service flow in the first quality of service flow indicates that backward compatibility is needed, the first carrier is a preset carrier; or if backward compatibility information of all the first quality of service flow indicates that backward compatibility is not needed, the first carrier is determined based on a second carrier corresponding to the first quality of service flow.

In a design, the method further includes: determining the backward compatibility information of the first quality of service flow based on a transmission profile of the first quality of service flow.

In a design, the method further includes: obtaining the transmission profile of the first quality of service flow from an upper layer.

In a design, the backward compatibility information indicates that backward compatibility is needed or backward compatibility is not needed.

According to a fourth aspect, a peer method of the third aspect is provided. For beneficial effects, refer to the descriptions of the third aspect. A communication method is provided. The method is performed by an access network device, or a module (for example, a chip or a circuit) in the access network device, or all or a part of logical nodes, logical modules, or software that implement a function of the access network device. The method includes: receiving first indication information, where the first indication information indicates a first carrier, and the first carrier is determined based on backward compatibility information of a first quality of service flow; determining configuration information of a first sidelink radio bearer SLRB based on the first carrier, where the configuration information of the first SLRB is associated with the first quality of service flow; and sending the configuration information of the first SLRB.

In a design, the first quality of service flow includes one or more quality of service flows: If backward compatibility information of one quality of service flow in the first quality of service flow indicates that backward compatibility is needed, the first carrier is a preset carrier; or if backward compatibility information of all the first quality of service flow indicates that backward compatibility is not needed, the first carrier is determined based on a second carrier corresponding to the first quality of service flow.

In a design, the backward compatibility information of the first quality of service flow is determined based on a transmission profile of the first quality of service flow.

In a design, the transmission profile of the first quality of service flow is obtained from an upper layer.

In a design, the backward compatibility information indicates that backward compatibility is needed or backward compatibility is not needed.

According to a fifth aspect, a communication method is provided. The method is performed by a terminal or a module (for example, a chip or a circuit) in the terminal, and includes: establishing a first SLRB based on configuration information of the first SLRB, where the configuration information of the first SLRB is associated with a first quality of service flow; and establishing a second SLRB based on backward compatibility information of the first quality of service flow and backward compatibility information of the first SLRB.

According to the foregoing design, if backward compatibility of a quality of service flow is different from backward compatibility of a configured and established SLRB, establishment of a new SLRB is triggered. Backward compatibility of the newly established SLRB is the same as the backward compatibility of the quality of service flow, to ensure that the backward compatibility of the quality of service flow is the same as backward compatibility of an SLRB to which the quality of service flow is mapped, ensure that a backward compatibility requirement indicated by an upper layer can be met when SL data transmission is performed at an AS, and improve SL communication quality.

In a design, the establishing the second SLRB based on the backward compatibility information of the first quality of service flow and the backward compatibility information of the first SLRB includes: when the backward compatibility information of the first quality of service flow is different from the backward compatibility information of the first SLRB, establishing the second SLRB.

In a design, the method further includes: determining the backward compatibility information of the first SLRB based on backward compatibility information included in the configuration information of the first SLRB; or determining the backward compatibility information of the first SLRB based on the backward compatibility information of the quality of service flow associated with the first SLRB.

In a design, the method further includes: determining the backward compatibility information of the first quality of service flow based on a transmission profile of the first quality of service flow.

In a design, the method further includes: obtaining the transmission profile of the first quality of service flow from an upper layer.

In a design, the backward compatibility information indicates that backward compatibility is needed or backward compatibility is not needed.

According to a sixth aspect, a communication method is provided. The method is performed by a terminal or a module (for example, a chip or a circuit) in the terminal. The method includes: obtaining configuration information of a first sidelink radio bearer SLRB, where the configuration information of the first SLRB is associated with a first quality of service flow; and determining, based on backward compatibility information of the first quality of service flow, a second carrier corresponding to the first SLRB.

According to the foregoing design, carrier information of the first SLRB is determined based on the backward compatibility information of the first quality of service flow associated with the first SLRB, so that transmission of the quality of service flow carried on or associated with the first SLRB can be ensured, a backward compatibility requirement indicated by an upper layer can be met, and SL communication quality can be improved.

In a design, the first quality of service flow includes one or more quality of service flows, and the determining, based on the backward compatibility information of the first quality of service flow, the second carrier corresponding to the first SLRB includes: If backward compatibility information of one quality of service flow in the first quality of service flow indicates that backward compatibility is needed, the second carrier is a preset carrier; or if backward compatibility information of all the first quality of service flow indicates that backward compatibility is not needed, the second carrier is determined based on a first carrier corresponding to the first quality of service flow.

In a design, the method further includes: determining the backward compatibility information of the first quality of service flow based on a transmission profile of the first quality of service flow.

In a design, the method further includes: obtaining the transmission profile of the first quality of service flow from the upper layer.

In a design, the backward compatibility information indicates that backward compatibility is needed or backward compatibility is not needed.

According to a seventh aspect, a communication method is provided. The method is performed by a terminal or a module (for example, a chip or a circuit) in the terminal. The method includes: determining backward compatibility information of a highest-priority logical channel LCH of a first destination; and selecting a first LCH based on the backward compatibility information of the logical channel highest-priority LCH of the first destination and backward compatibility information of the first LCH. Optionally, the first LCH may be an LCH of the first destination.

According to the foregoing design, when a specific LCH is selected based on the highest-priority LCH, backward compatibility information of the LCH is considered. For example, when the backward compatibility information of the LCH is the same as the backward compatibility information of the highest-priority LCH, the LCH is selected. This can ensure that backward compatibility information of LCHs multiplexed to a same TB for transmission is consistent, and SL data transmitted at an AS layer can ensure a backward compatibility requirement of an LCH layer, to improve SL communication quality.

In a design, the selecting the first LCH based on the backward compatibility information of the highest-priority LCH of the first destination and the backward compatibility information of the first LCH includes: when the backward compatibility information of the highest-priority LCH of the first destination is the same as the backward compatibility information of the first LCH, selecting the first LCH.

In a design, the backward compatibility information of the highest-priority LCH of the first destination and/or the backward compatibility information of the first LCH are/is determined as follows: based on a backward compatibility configuration included in configuration information of the LCH; or based on backward compatibility information of a quality of service flow associated with the LCH.

In a design, after the selecting the first LCH, the method further includes: generating a first transport block TB based on the highest-priority LCH and the first LCH.

In a design, the method further includes: When backward compatibility information of at least one of LCHs corresponding to the first TB indicates that backward compatibility is not needed, the first TB can perform cross-carrier scheduling and/or SL cross-carrier feedback.

In a design, the backward compatibility information indicates that backward compatibility is needed or backward compatibility is not needed.

According to an eighth aspect, an apparatus is provided. The apparatus can implement the method in the first aspect, the third aspect, the fifth aspect, the sixth aspect, or the seventh aspect. For example, the apparatus includes means (means) corresponding to the first aspect, the third aspect, the fifth aspect, the sixth aspect, or the seventh aspect. The apparatus may be implemented by hardware, implemented by software, or implemented by hardware executing corresponding software.

In a design, the apparatus includes a unit for performing the first aspect, the third aspect, the fifth aspect, the sixth aspect, or the seventh aspect.

In a design, the apparatus includes a processor and a memory. The processor is configured to execute a computer program or instructions stored in the memory, to cause the apparatus to implement the method in the first aspect, the third aspect, the fifth aspect, the sixth aspect, or the seventh aspect.

In a design, the apparatus includes a processor and an interface circuit. The interface circuit is configured to receive a signal from another apparatus other than the apparatus and transmit the signal to the processor, or send a signal from the processor to another apparatus other than the apparatus. The processor is configured to implement the method in the first aspect, the third aspect, the fifth aspect, the sixth aspect, or the seventh aspect by using a logic circuit or by executing code instructions.

According to a ninth aspect, an apparatus is provided. The apparatus can implement the method in the second aspect or the fourth aspect. For example, the apparatus includes a means (means) corresponding to the second aspect or the fourth aspect. The apparatus may be implemented by hardware, implemented by software, or implemented by hardware executing corresponding software.

In a design, the apparatus includes a unit that performs the second aspect or the fourth aspect.

In a design, the apparatus includes a processor and a memory. The processor is configured to execute a computer program or instructions stored in the memory, to cause the apparatus to implement the method in the second aspect or the fourth aspect.

In a design, the apparatus includes a processor and an interface circuit. The interface circuit is configured to receive a signal from another apparatus other than the apparatus and transmit the signal to the processor, or send a signal from the processor to another apparatus other than the apparatus. The processor is configured to implement the method in the second aspect or the fourth aspect by using a logic circuit or by executing code instructions.

According to a tenth aspect, a computer-readable storage medium is provided and stores a computer program or instructions. When the computer program or the instructions are run on a computer, the computer is caused to implement the method in any one of the first aspect to the seventh aspect.

According to an eleventh aspect, a computer program product is provided and includes a computer program or instructions. When the computer program or the instructions are run on a computer, the method in any one of the first aspect to the seventh aspect is performed.

According to a twelfth aspect, a chip is provided and includes a processor. The processor is coupled to a memory, and is configured to execute a computer program or instructions stored in the memory, to cause the chip to implement the method in any one of the first aspect to the seventh aspect.

According to a thirteenth aspect, a communication system is provided and includes a first communication apparatus and a second communication apparatus. The first communication apparatus is configured to implement the method in the first aspect, the third aspect, the fifth aspect, the sixth aspect, or the seventh aspect, and the second communication apparatus is configured to implement the method in the second aspect or the fourth aspect.

### BRIEF DESCRIPTION OF DRAWINGS

FIG. 1 is a diagram of an architecture of a communication system according to an embodiment of this application;
FIG. 2 is a diagram of a structure of a protocol stack according to an embodiment of this application;
FIG. 3 is a diagram of an SLRB according to an embodiment of this application;
FIG. 4 is a schematic flowchart according to an embodiment of this application;
FIG. 5 is another schematic flowchart according to an embodiment of this application;
FIG. 6 is still another schematic flowchart according to an embodiment of this application;
FIG. 7 is yet another schematic flowchart according to an embodiment of this application;
FIG. 8 is still yet another schematic flowchart according to an embodiment of this application;
FIG. 9 is a diagram of a structure of an apparatus according to an embodiment of this application; and
FIG. 10 is a diagram of another structure of an apparatus according to an embodiment of this application.

### DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

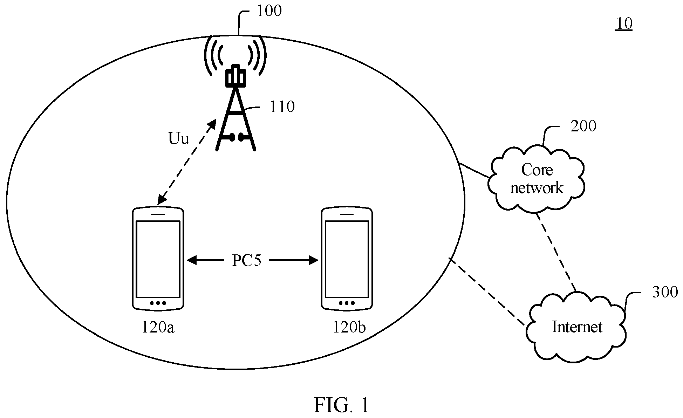

FIG. 1 is a diagram of a possible and non-limiting system. As shown in FIG. 1, a communication system 10 includes a radio access network (radio access network, RAN) 100 and a core network (core network, CN) 200. Optionally, the internet 300 is further included.

The RAN 100 includes at least one RAN node (for example, 110 in FIG. 1) and at least one terminal (for example, 120a and 120b in FIG. 1, which may be collectively referred to as 120). The RAN 100 may also include another RAN node, for example, a wireless relay device and/or a wireless backhaul device (not shown in FIG. 1).

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be referred to as an access network device, a RAN entity, an access node, or the like sometimes, and forms a part of the communication system, to help the terminal implement radio access. In subsequent descriptions of this application, unless otherwise specified, the "access network device" is used for description. A plurality of RAN nodes 110 in the communication system 10 may be nodes of a same type, or may be nodes of different types. Both the RAN node 110 and the terminal 120 are sometimes referred to as communication apparatuses. For example, the network element 110 in FIG. 1 may be understood as a communication apparatus having a base station function, and the network elements 120a and 120b may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next generation base station in a 6G mobile communication system, a base station in a future mobile communication system, an access node in a Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in embodiments of this application may alternatively be implemented by using a software function running on hardware, or may be implemented by using a virtualization function instantiated on a platform (for example, a cloud platform). Alternatively, the RAN node in embodiments of this application may be a logical node, a logical module, or software that can implement all or a part of functions of the RAN node.

In another possible scenario, a plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal 120 may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IOT), virtual reality (virtual reality, VR), augmented reality (augmented reality, AR), industrial control, self-driving, telemedicine, a smart grid, smart furniture, a smart office, smart wearable, smart transportation, and a smart city. The terminal may be a mobile phone, a head-mounted display device, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The terminal 120 may be connected to the RAN node 110 in a wireless manner. An interface between the terminal 120 and the RAN node 110 is a Uu interface. The RAN node 110 is connected to the core network 200 in a wireless or wired manner. A core network device in the core network 200 and the RAN node 110 in the RAN 100 may be different physical devices, or may be a same physical device that integrates a core network device logical function and a radio access network logical function.

The terminal 120a and the terminal 120b may directly communicate with each other. An interface between the terminal 120a and the terminal 120b is referred to as a prose communication 5 (prose communication 5, PC5) interface. A link between the terminal 120a and the terminal 120b is referred to as a sidelink (sidelink, SL). The SL may support unicast, multicast, broadcast, or the like. As shown in FIG. 1, the terminal 120a serves as transmitter (transmitter, TX) UE, and the terminal 120b serves as receiver (receiver, RX) UE. The TX UE may obtain an SL resource and send SL information to the RX UE based on the SL resource.

### [Protocol stack structure]

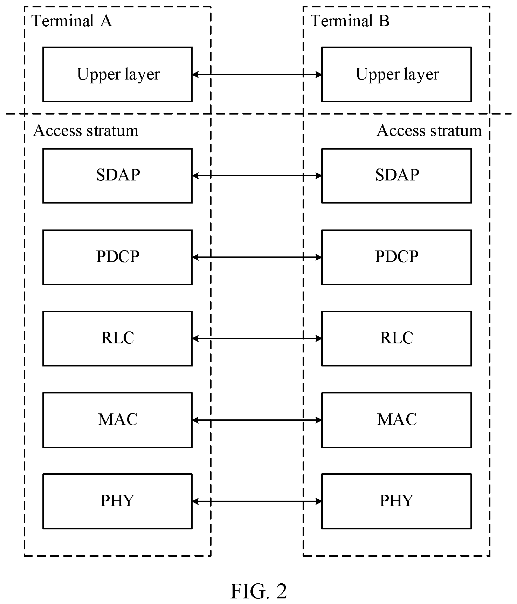

Communication between terminals complies with a specific protocol stack structure. The protocol stack structure includes a control plane protocol stack structure and a user plane protocol stack structure. The user plane protocol stack structure is used as an example. As shown in FIG. 2, the user plane protocol stack includes an upper layer and an access stratum (access stratum, AS). The upper layer may also be referred to as a vehicle-to-everything (vehicle-to-everything, V2X) layer, a prose (Prose) layer, or a PC5-signaling (PC5-signaling, PC5-S) layer. The access stratum, from top to bottom, includes: a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, a physical (physical, PHY) layer, and the like.

The SDAP layer is used to map data transmitted on a quality of service flow (QoS flow, quality of service, QoS) to a sidelink radio bearer (sidelink radio bearer, SLRB) for transmission. The PDCP layer is used to perform user plane security protection, for example, encryption protection and/or integrity protection. The RLC layer is responsible for error correction and flow control. The MAC layer controls and connects physical media at the physical layer. For example, when sending a data packet, the MAC layer may determine in advance whether the data packet can be sent. If the data packet can be sent, some control information is added to the data packet, and finally the data packet and the control information is sent to the PHY layer in a specified format. The PHY layer is configured to provide a service for a bit or a bit group transmitted between terminals.

Data transmission between terminals is used as an example. A terminal A is used as a TX terminal, and a terminal B is used as an RX terminal. After obtaining data at the upper layer, the terminal A transmits the data to the SDAP layer, the PDCP layer, the RLC layer, and the MAC layer. The MAC layer generates a transport block (transmission block, TB), then performs wireless transmission via the PHY, and sends the data to the terminal B. At a transmit end, data is correspondingly encapsulated at each layer. For example, data received by a specific layer from an upper layer of the layer is considered as a service data unit (service data unit, SDU) of the layer, is encapsulated by the layer into a protocol data unit (protocol data unit, PDU), and then is transferred to a next layer. When receiving the data, the terminal B sequentially decapsulates the data at the PHY layer, the MAC layer, the RLC layer, the PDCP layer, and the SDAP layer, and then transmits the data to the upper layer.

Optionally, the terminal may further have an application layer, and the application layer may be located above the upper layer. The application layer may be used to provide a service for an application installed in the terminal. For example, the data received by the terminal may be sequentially transmitted from the physical layer to the application layer, and then is provided by the application layer for the application. For another example, the application layer may obtain data generated by the application, sequentially transmit the data to the physical layer, and send the data to another terminal.

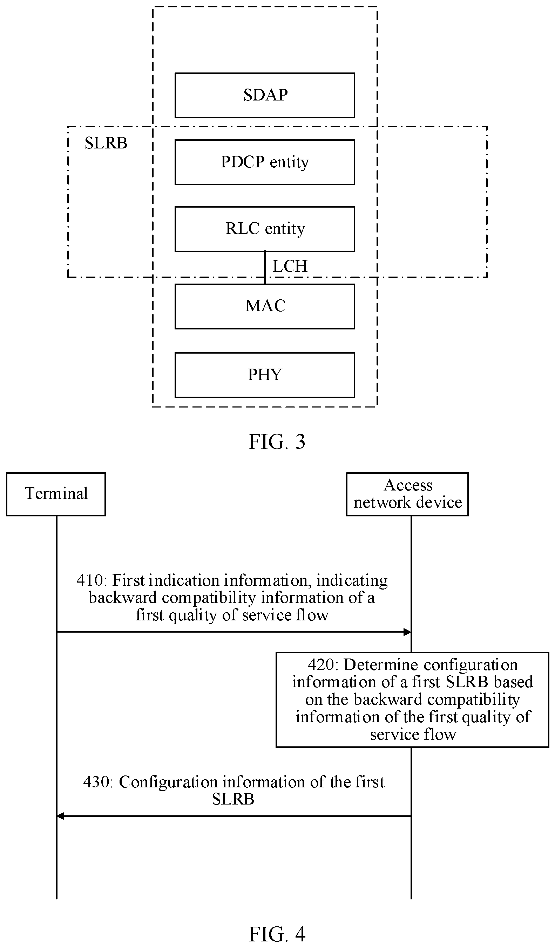

In a design, as shown in FIG. 3, the SLRB includes a PDCP entity, and the PDCP entity is located at the PDCP layer. Further, the SLRB may include an RLC entity, and the RLC entity is located at the RLC layer. A logical channel (logical channel, LCH) exists between the MAC layer and the RLC layer. Further, the SLRB includes the LCH. In an implementation, the MAC layer combines data in at least one SLRB/SL LCH into one transport block TB, and performs wireless transmission via the PHY layer.

In 3GPP release 18 (release 18, R18), a terminal supports SL carrier aggregation (carrier aggregation, CA), and the terminal may perform SL communication based on a plurality of carriers. In 3GPP release 16 (release 16, R16) and release 17 (release 17, R17), a terminal does not support SL CA, and the terminal can perform SL communication based only on one carrier. In the user plane protocol stack structure shown in FIG. 2, the upper layer may configure backward compatibility of each service. Backward compatibility of different services may be different. For example, transmission of some services needs backward compatibility. In this case, data transmitted by the services needs to be received by an R16/R17 terminal. Transmission of some services does not need backward compatibility. In this case, data transmitted by the services does not need to be received by an R16/R17 terminal. Further, the upper layer may configure at least one quality of service flow for each service, and backward compatibility of each quality of service flow is the same as backward compatibility of an associated service of the quality of service flow. Because the backward compatibility of different services may be different, backward compatibility of different quality of service flows may also be different.

In a design, an access network device may configure the SLRB for the terminal. For example, the access network device may send configuration information of the SLRB to the terminal, and the terminal establishes the SLRB based on the configuration information of the SLRB. In an implementation, configuration information of one SLRB includes an indication for mapping at least one quality of service flow to the SLRB, and the SDAP layer maps a quality of service flow to a corresponding SLRB based on a configuration of each SLRB.

In a current solution, when configuring the SLRB for the terminal, the access network device does not consider backward compatibility information of the quality of service flow. For example, a plurality of quality of service flows with different backward compatibility may be configured to be mapped to one SLRB, affecting SL communication quality.

In view of this, in embodiments of this application, the terminal reports backward compatibility information of a quality of service flow to the access network device; and the access network device determines an SLRB configuration based on the backward compatibility information that is of the quality of service flow and that is reported by the terminal and sends the SLRB configuration to the terminal. When the SLRB is configured for the terminal, backward compatibility information of different quality of service flows is considered. For example, a plurality of quality of service flows with same backward compatibility may be configured to be mapped to one SLRB, to improve SL communication quality.

### [Embodiment 1]

As shown in FIG. 4, an embodiment of this application provides a schematic flowchart, including the following steps.

Step 410: A terminal sends first indication information, and an access network device receives the first indication information.

The first indication information indicates backward compatibility information of a first quality of service flow. For example, the backward compatibility information includes: backward compatibility is needed or backward compatibility is not needed. The backward compatibility information of the first quality of service flow includes: The first quality of service flow needs backward compatibility, or the first quality of service flow does not need backward compatibility. In this case, the first indication information indicates whether the first quality of service flow needs backward compatibility or does not need backward compatibility.

In a design, the terminal determines the first indication information based on a transmission profile (Tx profile or TX profile) of the first quality of service flow. Optionally, an access stratum of the terminal may obtain the transmission profile of the first quality of service flow from an upper layer. In an implementation:

The transmission profile of the first quality of service flow may indicate the backward compatibility information of the first quality of service flow. For example, when the transmission profile of the first quality of service flow indicates that backward compatibility is needed, the first indication information indicates that the first quality of service flow needs backward compatibility; or when the transmission profile of the first quality of service flow indicates that backward compatibility is not needed, the first indication information indicates that the first quality of service flow does not need backward compatibility.

Alternatively, the transmission profile of the first quality of service flow may indicate that the first quality of service flow supports SL CA, does not support SL CA, or the like. For example, when the transmission profile of the first quality of service flow indicates that the first quality of service flow supports the SL CA, because conventional terminals such as R16 and R17 terminals do not support the SL CA, and the terminal in embodiments of this application may be an R18 terminal, it is considered that the first quality of service flow does not need backward compatibility. In this case, the first indication information may indicate that the first quality of service flow does not need backward compatibility. Alternatively, when the transmission profile of the first quality of service flow indicates that the first quality of service flow does not support the SL CA, it is considered that the first quality of service flow needs backward compatibility. In this case, the first indication information may indicate that the first quality of service flow needs backward compatibility.

In this embodiment of this application, the first quality of service flow includes one or more quality of service flows. For example, the first quality of service flow includes one quality of service flow. One quality of service flow may correspond to one or more transmission profiles. In a design, when one quality of service flow corresponds to one transmission profile, if the transmission profile corresponding to the quality of service flow indicates that backward compatibility is needed, the first indication information indicates that the first quality of service flow needs backward compatibility; or if the transmission profile corresponding to the quality of service flow indicates that backward compatibility is not needed, the first indication information indicates that the first quality of service flow does not need backward compatibility. Alternatively, when one quality of service flow corresponds to a plurality of transmission profiles, if all the plurality of transmission profiles corresponding to the quality of service flow indicate that backward compatibility is needed, the first indication information indicates that the first quality of service flow needs backward compatibility; or if one of the plurality of transmission profiles corresponding to the quality of service flow indicates that backward compatibility is not needed, the first indication information indicates that the first quality of service flow does not need backward compatibility. Alternatively, when a quality of service flow has no corresponding transmission profile, for example, if no transmission profile corresponding to the quality of service flow can be obtained from the upper layer, it is determined that the quality of service flow does not need backward compatibility. When the first quality of service flow includes a plurality of quality of service flows, backward compatibility of each quality of service flow may be determined according to the foregoing solution, and the backward compatibility of each quality of service flow is reported to the access network device. In other words, in this embodiment of this application, backward compatibility information is reported per (per) quality of service flow, and backward compatibility information corresponding to each quality of service flow is reported for each quality of service flow.

Optionally, the transmission profile of the first quality of service flow is associated with an identifier of the first quality of service flow and/or a quality of service flow profile (QoS profile) of the first quality of service flow. In an implementation, the access stratum of the terminal may determine, based on the identifier of the first quality of service flow and/or the quality of service flow profile of the first quality of service flow, the transmission profile corresponding to the first quality of service flow. Herein, the identifier of the first quality of service flow may be a PC5 quality of service flow identifier (PC5 QoS flow identifier, PFI) of the first quality of service flow, and the quality of service flow profile is a group of quality of service parameters.

In a design, in step 410, in addition to reporting the first indication information to the access network device, the terminal may further report the identifier of the first quality of service flow and/or the quality of service flow profile to the access network device. Herein, the identifier of the first quality of service flow may be an ID (identifier, ID) of the first quality of service flow, and may be different from the foregoing PFI.

Step 420: The access network device determines configuration information of a first SLRB based on the backward compatibility information of the first quality of service flow.

In a design, it may be described as follows: The configuration information of the first SLRB is determined based on the backward compatibility information of the first quality of service flow. The configuration information of the first SLRB includes a mapping relationship between a quality of service flow and the first SLRB, and other SLRB configuration information. For example, the first SLRB includes one SLRB. The access network device may map quality of service flows with same backward compatibility information to one SLRB. For example, the terminal reports backward compatibility information of four quality of service flows to the access network device, which are respectively: a quality of service flow 1 needs backward compatibility, a quality of service flow 2 needs backward compatibility, a quality of service flow 3 does not need backward compatibility, and a quality of service flow 4 does not need backward compatibility. In this case, the access network device may configure the quality of service flow 1 and the quality of service flow 2 to be mapped to one SLRB, and configure the quality of service flow 3 and the quality of service flow 4 to be mapped to another SLRB. In a description, that the configuration information of the first SLRB is associated with the first quality of service flow may be understood as: configuring the first quality of service flow to be mapped to the first SLRB. In an implementation, the first quality of service flow includes a plurality of quality of service flows, and the plurality of quality of service flows have same backward compatibility.

Step 430: The access network device sends the configuration information of the first SLRB, and the terminal receives the configuration information of the first SLRB.

In a design, the terminal establishes an SLRB by using a quality of service flow as an anchor. For example, a quality of service flow is configured to be mapped to an SLRB. The terminal may determine whether the SLRB is established. If the SLRB is established, establishment of the SLRB is not triggered again. Alternatively, if the SLRB is not established, establishment of the SLRB is triggered. For example, the terminal establishes the SLRB based on configuration information of the SLRB.

Optionally, the terminal may determine backward compatibility information of the first SLRB. For example, the backward compatibility information of the first SLRB includes: The first SLRB needs backward compatibility, or the first SLRB does not need backward compatibility.

In an implementation, the configuration information of the first SLRB includes second indication information, and the second indication information indicates the backward compatibility information of the first SLRB. The terminal may determine the backward compatibility information of the first SLRB based on an indication of the second indication information. For example, if the second indication information indicates that the first SLRB needs backward compatibility, it is determined that the first SLRB needs backward compatibility. Alternatively, if the second indication information indicates that the first SLRB does not need backward compatibility, it is determined that the first SLRB does not need backward compatibility. In an implementation, the configuration information of the first SLRB includes configuration information of a logical channel LCH, and the configuration information of the LCH includes the second indication information, which may alternatively be described as that the second indication information indicates backward compatibility information of the LCH, and the backward compatibility information of the first SLRB is the same as the backward compatibility information of the LCH.

In another implementation, the terminal may determine the backward compatibility information of the first SLRB based on the backward compatibility information of the first quality of service flow. For example, the configuration information of the first SLRB includes a configuration of a mapping relationship between the quality of service flow and the first SLRB. In the description of this application, an example in which the first quality of service flow is configured to be mapped to the first SLRB is used for description. Optionally, configured quality of service flows that have a mapping relationship with the first SLRB have same backward compatibility. In other words, the first quality of service flow includes a plurality of quality of service flows, the plurality of quality of service flows have consistent backward compatibility, and backward compatibility of the first SLRB is the same as backward compatibility of the first quality of service flow. For example, the first quality of service flow is one or more quality of service flows. If backward compatibility information of the one or more quality of service flows is that backward compatibility is needed, the backward compatibility information of the first SLRB is that backward compatibility is needed; or if backward compatibility information of the one or more quality of service flows is that backward compatibility is not needed, the backward compatibility information of the first SLRB is that backward compatibility is not needed. It may alternatively be described as that the backward compatibility information of the first SLRB is determined based on backward compatibility information of a quality of service flow carried on, associated with, or mapped to the first SLRB. For example, the first SLRB is associated with a plurality of quality of service flows. If the plurality of quality of service flows have same backward compatibility, backward compatibility of the first SLRB is the same as the backward compatibility of the plurality of quality of service flows; or if the plurality of quality of service flows have inconsistent backward compatibility, the backward compatibility of the first SLRB is that backward compatibility is needed.

It may be understood that the SLRB in this embodiment of this application may be a sidelink data radio bearer (SL data radio bearer, SL DRB), a sidelink signaling radio bearer (SL signaling radio bearer, SL SRB), and/or the like. The SL DRB is used for user plane SL data transmission, and the SL SRB is used for control plane SL signaling transmission. In this embodiment of this application, the SL DRB is mainly used as an example for description.

In the foregoing design, the terminal determines, on a per QoS flow basis, whether each quality of service flow needs backward compatibility, and reports, to the access network device, whether each quality of service flow needs backward compatibility, so that the access network device can consider backward compatibility of different quality of service flows when configuring a mapping relationship between a quality of service flow and an SLRB. For example, the access network device may configure quality of service flows with same backward compatibility to be mapped to one SLRB, to avoid configuring quality of service flow with different backward compatibility to be mapped to one SLRB. This ensures that a backward compatibility requirement indicated by the upper layer is met when SL data transmission is performed at the AS, and SL communication quality is improved.

### [Embodiment 2]

In a design, a terminal may establish a first SLRB based on configuration information of the first SLRB; and the terminal establishes a second SLRB based on backward compatibility information of a first quality of service flow and backward compatibility information of the first SLRB. For example, when the backward compatibility information of the first quality of service flow is different from the backward compatibility information of the first SLRB, the second SLRB is established. Alternatively, when the backward compatibility information of the first quality of service flow is the same as the backward compatibility information of the first SLRB, the second SLRB is not established.

In an implementation, the terminal may obtain the configuration information of the first SLRB in the manner in [Embodiment 1]. For example, when the terminal is in a radio resource control (radio resource control, RRC) connected state, the terminal reports backward compatibility information of each quality of service flow to an access network device, and the terminal receives the configuration information of the first SLRB from the access network device.

In another implementation, the configuration information of the first SLRB may be preconfigured, and the terminal may obtain the configuration information of the first SLRB through pre-configuration. Alternatively, the terminal may obtain the configuration information of the first SLRB via a system information block (system information block, SIB), RRC dedicated signaling, or in another manner. In this case, the terminal may be in a non-RRC connected state, and the non-RRC connected state includes an RRC idle state, an RRC inactive state, an out of coverage (Out of coverage, OOC) state, or the like. Alternatively, when the terminal is in an RRC connected state, the terminal may obtain the configuration information of the first SLRB, and the like.

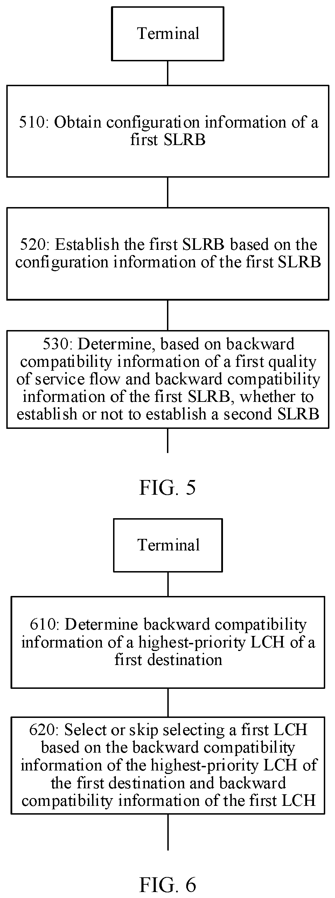

As shown in FIG. 5, an embodiment of this application provides a flowchart, including the following steps.

Step 510: The terminal obtains the configuration information of the first SLRB.

For an implementation solution in which the terminal obtains the configuration information of the first SLRB, refer to the foregoing descriptions.

Step 520: The terminal establishes the first SLRB based on the configuration information of the first SLRB.

In an implementation, the configuration information of the first SLRB indicates that the first quality of service flow is mapped to the first SLRB. In other words, the first SLRB is associated with the first quality of service flow.

In another implementation, the configuration information of the first SLRB indicates that a second quality of service flow is mapped to the first SLRB. In other words, the first SLRB is associated with the second quality of service flow. In this case, the first SLRB is established by using the second quality of service flow as an anchor.

Step 530: The terminal determines, based on the backward compatibility information of the first quality of service flow and the backward compatibility information of the first SLRB, whether to establish or not to establish the second SLRB.

In a design, for a process in which the terminal determines the first quality of service flow and the backward compatibility information of the first SLRB, refer to the descriptions in Embodiment 1. The first quality of service flow includes one or more quality of service flows. For example, the first quality of service flow is one quality of service flow. A quality of service flow is configured and established, and the quality of service flow needs to be mapped to the first SLRB based on a configuration in the first SLRB. In this embodiment of this application, instead of directly mapping the quality of service flow to the first SLRB, whether backward compatibility of the quality of service flow is consistent with backward compatibility of the first SLRB is considered. If the backward compatibility of the quality of service flow is consistent with the backward compatibility of the first SLRB, the quality of service flow is mapped to the first SLRB. Alternatively, if the backward compatibility of the quality of service flow is inconsistent with the backward compatibility of the first SLRB, a new SLRB is established, and the new SLRB is referred to as the second SLRB. The quality of service flow is mapped to the second SLRB, and backward compatibility of the second SLRB is the same as the backward compatibility of the quality of service flow. It may be understood that the second SLRB may alternatively be established based on the configuration information of the first SLRB. Further, optionally, an identifier of an LCH corresponding to the second SLRB is different from an identifier of an LCH corresponding to the first SLRB.

According to the foregoing design, if backward compatibility of a quality of service flow is different from backward compatibility of a configured and established SLRB, establishment of a new SLRB is triggered. Backward compatibility of the newly established SLRB is the same as the backward compatibility of the quality of service flow, to ensure that the backward compatibility of the quality of service flow is the same as backward compatibility of an SLRB to which the quality of service flow is mapped, ensure that a backward compatibility requirement indicated by an upper layer can be met when SL data transmission is performed at an AS, and improve SL communication quality.

### [Embodiment 3]

As shown in FIG. 6, an embodiment of this application provides a flowchart, including the following steps.

Step 610: A terminal determines backward compatibility information of a highest-priority LCH of a first destination.

In a design, the terminal selects the first destination (destination); determines the highest-priority LCH of the first destination; and determines the backward compatibility information of the highest-priority LCH. It may be understood that, as a TX terminal, the terminal may perform SL communication with a plurality of RX terminals. Each time the terminal performs new SL transmission, the terminal selects one RX terminal from at least one RX terminal. The selected RX terminal may be considered as the first destination. The terminal may perform SL communication with the first destination by using at least one SLRB. Each SLRB includes, is associated with, or corresponds to at least one LCH. It may be understood that in the descriptions of this application, descriptions of "including", "associated with", or "corresponding to" are not distinguished, and may be replaced with each other. For example, "including" may be replaced with "corresponding to" or "associated with", or "corresponding to" may be replaced with "associated with". For example, each SLRB includes one LCH, or in a duplication (duplication) scenario, each SLRB includes a plurality of LCHs. The terminal may select a highest-priority LCH from LCHs corresponding to at least one SLRB.

In an implementation, configuration information of an SLRB includes a configuration of an LCH, and a configuration of the LCH includes backward compatibility information and the like. The terminal may determine backward compatibility information of the highest-priority LCH based on backward compatibility information included in configuration information of the highest-priority LCH.

In another implementation, the terminal determines backward compatibility information of the highest-priority LCH based on backward compatibility information of a quality of service flow associated with the highest-priority LCH. A quality of service flow associated with an LCH is described as follows: An SLRB has an association relationship with a quality of service flow. For example, a quality of service flow has an association relationship with an SLRB to which the quality of service flow is mapped. The SLRB has an association relationship with at least one quality of service flow, and an LCH included in the SLRB also has an association relationship with the at least one quality of service flow. For example, there is one quality of service flow associated with the highest-priority LCH, and the backward compatibility information of the highest-priority LCH is the same as backward compatibility information of the quality of service flow. Alternatively, there are a plurality of quality of service flows associated with the highest-priority LCH. If the plurality of quality of service flows have same backward compatibility information, the backward compatibility information of the highest-priority LCH is the same as the backward compatibility information of the plurality of quality of service flows; or if the plurality of quality of service flows have different backward compatibility information, the backward compatibility information of the highest-priority LCH is that backward compatibility is needed.

It may be understood that, in this embodiment of this application, the terminal may first select the first destination, then select the highest-priority LCH of the first destination, and then determine the backward compatibility information of the highest-priority LCH of the first destination. Alternatively, the terminal may select the highest-priority LCH; then determine a destination corresponding to the highest-priority LCH, where the destination is the first destination; and then determine the backward compatibility information of the highest-priority LCH of the first destination, and the like. It may be understood that, the backward compatibility information of the highest-priority LCH of the first destination and the like may be determined in another manner. This is not limited.

Step 620: The terminal selects or skips selecting a first LCH based on the backward compatibility information of the highest-priority LCH of the first destination and backward compatibility information of the first LCH. Optionally, the first LCH is an LCH of the first destination.

In this embodiment of this application, a process in which the terminal determines the backward compatibility information of the first LCH is similar to the process in which the terminal determines the backward compatibility information of the highest-priority LCH of the first destination. For example, the terminal may determine the backward compatibility information of the first LCH based on a configuration of the first LCH, or the terminal may determine the backward compatibility information of the first LCH based on backward compatibility information of a quality of service flow associated with the first LCH.

In a design, when the backward compatibility information of the highest-priority LCH of the first destination is the same as the backward compatibility information of the first LCH, the first LCH is selected. For example, when the backward compatibility information of the highest-priority LCH of the first destination is the same as the backward compatibility information of the first LCH, and the two pieces of backward compatibility information both indicate that backward compatibility is needed or both indicate that backward compatibility is not needed, the first LCH is selected.

When the backward compatibility information of the highest-priority LCH of the first destination is different from the backward compatibility information of the first LCH, the first LCH is not selected. For example, when the highest-priority LCH of the first destination needs backward compatibility, and the first LCH does not need backward compatibility; or when the highest-priority LCH of the first destination does not need backward compatibility, and the first LCH needs backward compatibility, the backward compatibility information of the highest-priority LCH of the first destination is different from the backward compatibility information of the first LCH, so that the first LCH is not selected.

Optionally, after step 620, the method further includes: The terminal generates a first TB based on the highest-priority LCH of the first destination and the first LCH. In an understanding, data in the highest-priority LCH of the first destination is considered as data to be sent by the terminal. Before sending the data, the terminal may select, from other LCHs of to-be-sent data, an LCH whose backward compatibility is consistent with backward compatibility of an LCH (that is, the highest-priority LCH of the first destination) of the current to-be-sent data, and assemble the LCHs into one TB. The TB is referred to as the first TB.

Optionally, when backward compatibility information of at least one of LCHs corresponding to the first TB indicates that backward compatibility is not needed, the first TB can perform cross-carrier scheduling and/or SL cross-carrier feedback. Alternatively, when backward compatibility information of all LCHs corresponding to the first TB indicates that backward compatibility is needed, the first TB cannot perform cross-carrier scheduling and/or SL cross-carrier feedback.

In an implementation, according to the foregoing design, the LCHs corresponding to the first TB have same backward compatibility information. For example, the LCHs corresponding to the first TB include the highest-priority LCH of the first destination and the first LCH. Therefore, when the backward compatibility information of all the LCHs corresponding to the first TB is that backward compatibility is needed, the first TB cannot perform cross-carrier scheduling and/or SL cross-carrier feedback. Alternatively, when the backward compatibility information of all the LCHs corresponding to the first TB is that backward compatibility is not needed, the first TB can perform cross-carrier scheduling, SL cross-carrier feedback, and/or the like.

The cross-carrier scheduling means that sidelink control information (sidelink control information, SCI) for scheduling SL data and the SL data use different carriers. For example, a TX terminal sends SCI and a TB to an RX terminal, where the SCI is for scheduling SL transmission of the TB. Transmission carriers of the SCI and the TB are different. For example, the SCI is transmitted on a carrier 1, and the TB is transmitted on a carrier 2. The SL cross-carrier feedback means that transmission carriers of SL data and hybrid automatic repeat request (hybrid automatic repeat request, HARQ) feedback of the SL data are different. For example, a TX terminal sends a TB to a RX terminal, and the TB carries the SL data. When receiving the TB, the RX terminal sends HARQ feedback to the TX terminal. The HARQ feedback includes acknowledgment (acknowledgment, ACK) and negative acknowledgment (negative acknowledgment, NACK). Transmission carriers of the TB and the HARQ feedback are different. For example, the TB is transmitted on a carrier 3, and the HARQ feedback is transmitted on a carrier 4.

In a design, [Embodiment 3] may be a subsequent implementation of [Embodiment 1], [Embodiment 2], or [Embodiment 5]. For example, if the first SLRB or the second SLRB established in [Embodiment 1], [Embodiment 2], or [Embodiment 5] includes the first LCH, the solution of [Embodiment 3] may be used, and it may be determined to select or not to select the first LCH. The first LCH is selected, the first TB is generated based on the highest-priority LCH of the first destination and the first LCH, and data corresponding to the first TB is sent to the receiver terminal. Alternatively, [Embodiment 3] may be used in an SL logical channel prioritization (logical channel prioritization, LCP) procedure, and the like. This is not limited. It may be understood that, in this embodiment of this application, the two terminals may perform unicast, multicast, broadcast, or the like on an SL link. The two terminals perform unicast communication, and the transmitter terminal may synchronize, to the receiver terminal, a part of an SLRB configuration or the entire SLRB configuration configured by an access network device for the transmitter terminal.

According to the foregoing design, when a specific LCH is selected based on the highest-priority LCH, backward compatibility information of the LCH is considered. For example, when the backward compatibility information of the LCH is the same as the backward compatibility information of the highest-priority LCH, the LCH is selected. This can ensure that backward compatibility information of LCHs multiplexed to a same TB for transmission is consistent, and SL data transmitted at the AS layer can ensure a backward compatibility requirement of an LCH layer, to improve SL communication quality.

### [Embodiment 4]

In Embodiment 4, when a terminal is in an RRC connected state, carrier information corresponding to each quality of service flow may be reported per quality of service flow. An access network device may configure an SLRB based on the carrier information corresponding to each quality of service flow. For example, quality of service flows with same carrier information are mapped to a same SLRB to the fullest extent.

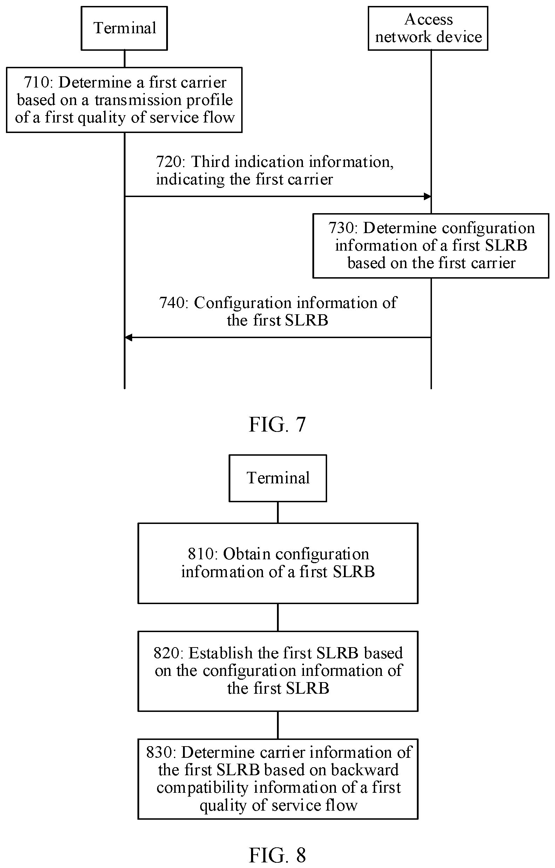

As shown in FIG. 7, an embodiment of this application provides a flowchart, including the following steps.

Step 710: The terminal determines a first carrier based on a transmission profile of a first quality of service flow.

In an implementation, the terminal may obtain, from an upper layer, the transmission profile of the first quality of service flow and a second carrier corresponding to/supported by the first quality of service flow. It may be understood that the transmission profile of the first quality of service flow and the second carrier corresponding to the first quality of service flow are associated with an identifier of the first quality of service flow and/or a quality of service flow profile (QoS profile) of the first quality of service flow. For example, the terminal may determine, based on the identifier of the first quality of service flow and/or the QoS profile of the first quality of service flow, the transmission profile of the first quality of service flow, the second carrier corresponding to/supported by the first quality of service flow, and the like. In step 710, the identifier of the first quality of service flow may be a PFI.

The first quality of service flow may correspond to one or more transmission profiles. When the first quality of service flow corresponds to one transmission profile, if the transmission profile indicates that backward compatibility is not needed, it is determined that the first carrier is the same as the second carrier, in other words, the first carrier is the second carrier corresponding to/supported by the first quality of service flow; or if the transmission profile indicates that backward compatibility is needed, the first carrier is a preset carrier. The preset carrier may be a legacy (legacy) carrier, a default carrier, a carrier supported by an R16/R17 SL terminal, or a carrier in a carrier list included in a system information block SIB 12. Alternatively, when the first quality of service flow corresponds to a plurality of transmission profiles, if one of the plurality of transmission profiles indicates that backward compatibility is needed, the first carrier is a preset carrier; or if all the plurality of transmission profiles indicate that backward compatibility is not needed, the first carrier is the same as the second carrier. Alternatively, there may be a case in which the first quality of service flow has no corresponding transmission profile. In this case, the second carrier is the preset carrier.

Step 720: The terminal sends third indication information, and the access network device receives the third indication information.

The third indication information indicates the first carrier. Optionally, in addition to sending the third indication information to the access network device, the terminal may further send information about the first quality of service flow to the access network device. For example, the information about the first quality of service flow includes the identifier of the first quality of service flow, the QoS profile of the first quality of service flow, and/or the like. In step 720, the identifier of the first quality of service flow may be an ID of the first quality of service flow. In an implementation, the terminal may send the third indication information, the information about the first quality of service flow, and/or the like to the access network device via a sidelink user equipment information (sidelink UE information, SUI) message.

Step 730: The access network device determines configuration information of a first SLRB based on the first carrier.

In this embodiment of this application, the configuration information of the first SLRB is determined based on the first carrier. The configuration information of the first SLRB is associated with the first quality of service flow. For example, the first quality of service flow may be configured to be mapped to the first SLRB.

In a design, the access network device determines carrier information of the first SLRB based on the first carrier corresponding to the first quality of service flow. The access network device determines the configuration information of the first SLRB based on the carrier information of the first SLRB. For example, the configuration information of the first SLRB includes the carrier information of the first SLRB. For example, the terminal reports, to the access network device on a per QoS flow basis, a carrier corresponding to each quality of service flow. The carrier information of the first SLRB may be an intersection set or a union set of carriers corresponding to a quality of service flow that has a mapping relationship or an association relationship with the first SLRB.

Step 740: The access network device sends the configuration information of the first SLRB, and the terminal receives the configuration information of the first SLRB.

In a design, the configuration information of the first SLRB includes the carrier information of the first SLRB. In a processing process, a MAC layer of the terminal multiplexes at least one SLRB to one TB for transmission on a specific carrier. It may be understood that each of the at least one SLRB multiplexed to one TB supports transmission on the carrier.

In a design, the terminal may use the quality of service as an anchor, and establish the first SLRB based on the configuration information of the first SLRB. For details, refer to the descriptions in [Embodiment 1]. Alternatively, when receiving a configuration of a quality of service flow, the terminal may determine, according to the solution in [Embodiment 2], whether to establish a second SLRB. Certainly, the second SLRB may be established based on the configuration information of the first SLRB.

According to the foregoing design, the terminal reports, to the access network device on a per QoS flow basis, the carrier information corresponding to each quality of service flow. The access network device configures carrier information of an SLRB for the terminal based on the carrier information corresponding to each quality of service flow, to avoid, for example, a case in which a carrier configured for the SLRB is not supported by a quality of service flow that has an association or a mapping relationship with the SLRB, to ensure that a backward compatibility requirement of the quality of service flow can be ensured in transmission at an AS layer, to improve SL communication quality.

### [Embodiment 5]

A process in which a terminal determines carrier information of a first SLRB in a non-RRC connected state is mainly described in Embodiment 5. Certainly, the solution in Embodiment 5 is also applicable to an RRC connected state. This is not limited.

As shown in FIG. 8, an embodiment of this application provides a flowchart, including the following steps.

Step 810: The terminal obtains configuration information of the first SLRB, where the configuration information of the first SLRB is associated with a first quality of service flow.

A process in which the terminal obtains the configuration information of the first SLRB is not limited. For example, in the RRC connected state, the terminal obtains the configuration information of the first SLRB by using the solution in Embodiment 1. Alternatively, in the non-RRC connected state, the RRC connected state, or the like, the terminal obtains the configuration information of the first SLRB or the like through pre-configuration, the SIB, the RRC dedicated signaling, or another solution in [Embodiment 2]. This is not limited.

Step 820: The terminal establishes the first SLRB based on the configuration information of the first SLRB.

For example, the first quality of service flow is configured to be mapped to the first SLRB, the first quality of service flow is configured to be established, and the first SLRB is not established. The terminal may establish the first SLRB based on the configuration information of the first SLRB.

Step 830: The terminal determines the carrier information of the first SLRB based on backward compatibility information of the first quality of service flow.

In a design, the terminal obtains a transmission profile of the first quality of service flow from an upper layer, and determines the backward compatibility information of the first quality of service flow based on the transmission profile of the first quality of service flow. For details, refer to the descriptions in [Embodiment 1]. Optionally, the terminal may further determine backward compatibility information of the first SLRB. For a process in which the terminal determines the backward compatibility information of the first SLRB, refer to the descriptions in [Embodiment 1].

In a design, the first quality of service flow is configured to be mapped to the first SLRB, and the first quality of service flow includes one or more quality of service flows. When the first quality of service flow includes one quality of service flow, if backward compatibility information of the quality of service flow is that backward compatibility is needed, the carrier information of the first SLRB is a preset carrier; or if the backward compatibility information of the quality of service flow indicates that backward compatibility is not needed, information about the first SLRB is carrier information corresponding to or supported by the quality of service flow. The terminal may obtain carrier information corresponding to or supported by a quality of service flow from the upper layer.

Alternatively, when the first quality of service flow includes a plurality of quality of service flows, if backward compatibility information of all the plurality of quality of service flows is that backward compatibility is not needed, the carrier information of the first SLRB is a carrier supported by all the plurality of quality of service flows, where the carrier supported by all the plurality of quality of service flows may be an intersection set of carriers supported by the plurality of quality of service flows, a union set of carriers supported by the plurality of quality of service flows, or the like. Alternatively, if backward compatibility information of one of the plurality of quality of service flows indicates that backward compatibility is needed, the carrier information of the first SLRB is a preset carrier. For the preset carrier, refer to the foregoing descriptions.

According to the foregoing design, the carrier information of the first SLRB is determined based on the backward compatibility information of the first quality of service flow associated with the first SLRB, so that transmission of the quality of service flow carried on or associated with the first SLRB can be ensured, a backward compatibility requirement indicated by the upper layer can be met, and SL communication quality can be improved.

It may be understood that, in embodiments of this application:
1. The description "backward compatibility information is needed" may be replaced with: SL CA is not supported. The description that the backward compatibility is not needed may be replaced with: SL CA is supported. For example, that the first quality of service flow needs backward compatibility may be replaced with: The first quality of service flow does not support SL CA. That the first quality of service flow does not need backward compatibility may also be replaced with: The first quality of service flow supports SL CA.
2. The description of "backward compatibility information" may be replaced with: transmission profile. For example, the backward compatibility information of the first quality of service flow may be replaced with the transmission profile of the first quality of service flow.
3. The description of "associated with" may be replaced with: corresponding to, mapped, and the like. For example, that the configuration information of the first SLRB is associated with the first quality of service flow may be replaced with that the configuration information of the first SLRB corresponds to the first quality of service flow, or the first quality of service flow is mapped to an SLRB corresponding to the configuration information of the first SLRB.
4. Different embodiments may be implemented separately, or may be implemented in combination with each other. This is not limited. The description focuses on differences between different procedures, and descriptions of different procedures may refer to one another.
5. In the procedures in FIG. 4 to FIG. 8, a sequence of different steps is not limited. In addition, each procedure may include fewer steps or more steps than the schematic flowchart or the text descriptions.
6. In the procedures in FIG. 4 to FIG. 8, an example in which the terminal and/or the access network device are/is an execution body is used for description. It may be understood that, in each procedure, a function of the terminal may be implemented by the terminal, or may be implemented by a module (for example, a chip or a circuit) in the terminal. A function of the access network device may be implemented by the access network device, or may be implemented by a module (for example, a chip or a circuit) in the access network device, or may be implemented by a logical node, a logical module, or software that can implement all or a part of functions of the access network device.
7. In embodiments of this application, "(for example, the terminal) receiving information from (for example, the access network device)" may be understood as that a source end of the information is the access network device, and a destination end of the information is the terminal. This may include: The terminal directly or indirectly receives the information from the access network device. The information may undergo necessary processing, for example, a format change, between the source end for sending the information and the destination end. However, the destination end may understand valid information from the source end. A similar expression in this application may be understood similarly, and details are not described herein again.

In the foregoing embodiments provided in this application, the method provided in embodiments of this application is described from the perspective of interaction between the access network device and the terminal. To implement functions in the method provided in embodiments of this application, the access network device, the terminal, or the like may include a hardware structure and/or a software module, and implement the functions in the form of the hardware structure, the software module, or a combination of the hardware structure and the software module. Whether a function in the foregoing functions is performed in a manner of a hardware structure, a software module, or a hardware structure and a software module depends on specific applications and design constraints of the technical solutions.

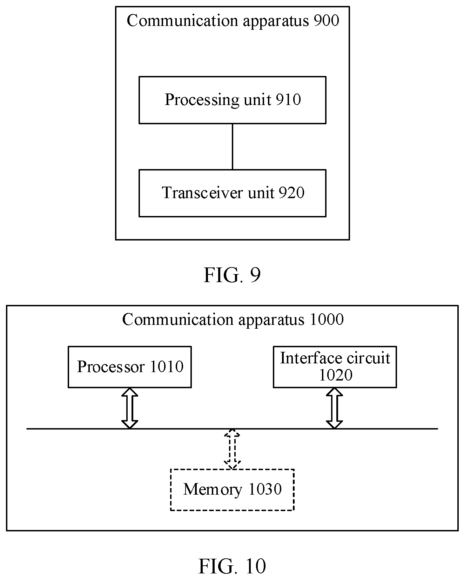

FIG. 9 and FIG. 10 are diagrams of structures of possible apparatuses according to embodiments of this application. These communication apparatuses may implement one or more corresponding functions in the foregoing method embodiments, for example, a function implemented by the terminal, the access network device, and the like. Therefore, beneficial effects of the foregoing method embodiments may be implemented.

As shown in FIG. 9, a communication apparatus 900 includes a processing unit 910 and a transceiver unit 920.

For example, the processing unit 910 may also be referred to as a processor, a processing board, a processing module, a processing apparatus, or the like. The transceiver unit 920 may also be referred to as a transceiver, a transceiver machine, a transceiver module, a transceiver apparatus, a communication unit, or the like. Further, the transceiver unit 920 may include at least one of a sending unit or a receiving unit. The sending unit and the receiving unit may be integrated together, or may be two independent units, or the like.

In a design, the communication apparatus 900 is configured to implement functions of the terminal in FIG. 4. Specifically:
The processing unit 910 is configured to generate first indication information. The transceiver unit 920 is configured to send the first indication information, where the first indication information indicates backward compatibility information of a first quality of service flow. The transceiver unit 920 is further configured to receive configuration information of a first sidelink radio bearer SLRB, where the configuration information of the first SLRB is associated with the first quality of service flow, and the configuration information of the first SLRB is determined based on the backward compatibility information of the first quality of service flow.

In another design, the communication apparatus 900 is configured to implement a function of the access network device in FIG. 4. Specifically:
The transceiver unit 920 is configured to receive first indication information, where the first indication information indicates backward compatibility information of a first quality of service flow. The processing unit 910 is configured to determine configuration information of a first sidelink radio bearer SLRB based on the backward compatibility information of the first quality of service flow, where the configuration information of the first SLRB is associated with the first quality of service flow. The transceiver unit 920 is further configured to send the configuration information of the first SLRB.

For more detailed descriptions of the processing unit 910 and the transceiver unit 920, refer to the descriptions in FIG. 4 in the foregoing method embodiments. Details are not described herein again.

It may be understood that, in embodiments of this application, division into the units is an example, and is merely logical function division. During actual implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

FIG. 10 is a diagram of another structure of a communication apparatus 1000 according to an embodiment of this application. For example, the communication apparatus 1000 shown in FIG. 10 may be an implementation of a hardware circuit of the communication apparatus 900 shown in FIG. 9. For ease of description, FIG. 10 shows only a main part of the communication apparatus.

As shown in FIG. 10, the communication apparatus 1000 includes a processor 1010 and an interface circuit 1020. The processor 1010 and the interface circuit 1020 are coupled to each other.

For example, the processor 1010 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like. The interface circuit 1020 may be a transceiver, an input/output circuit, or the like.

Optionally, the communication apparatus 1000 may further include a memory 1030, configured to store instructions executed by the processor 1010, input data needed by the processor 1010 to run instructions, or data generated after the processor 1010 runs instructions. For example, the instructions may also be referred to as a computer program, computer program code, or the like.

For example, the memory 1030 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

When the communication apparatus 1000 is configured to implement the method of the terminal or the access network device in FIG. 4, the processor 1010 is configured to implement a function of the processing unit 910, and the interface circuit 1020 is configured to implement a function of the transceiver unit 920.

In a design, the interface circuit 1020 is configured to receive a signal from a communication apparatus other than the communication apparatus 1000 and transmit the signal to the processor 1010, or send a signal from the processor 1010 to a communication apparatus other than the communication apparatus. The processor 1010 is configured to implement a function of the terminal or the access network device in FIG. 4 by using a logic circuit or executing code instructions.

An embodiment of this application further provides a communication apparatus. The communication apparatus includes a processor and a memory. The processor is coupled to the memory, and the processor is configured to implement a function of the terminal or the access network device in FIG. 4. For example, the processor may execute instructions in the memory, so that the communication apparatus implements one or more functions in the foregoing method embodiments, for example, a function implemented by the terminal or the access network device in FIG. 4. An example storage medium is coupled to a processor, so that the processor can read information from the storage medium and can write information into the storage medium. Certainly, the storage medium may be a component of the processor. The processor and the storage medium may be disposed in an ASIC. In addition, the ASIC may be located in the terminal or the access network device in FIG. 4. The processor and the storage medium may alternatively exist in the terminal or the access network device in FIG. 4 as discrete components.

An embodiment of this application further provides a computer-readable storage medium. The computer-readable storage medium stores instructions, and the instructions may also be referred to as a computer program, computer program code, or the like. The instructions are run on a computer, so that the computer performs a function of the terminal or the access network device in FIG. 4 in the foregoing method embodiment.

Optionally, the computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application further provides a computer program product, including a computer program or instructions. When the computer program or instructions are run on a computer, the method of the terminal or the access network device in FIG. 4 is performed. For example, the computer program product includes one or more computer programs or instructions. When the computer program or the instructions are loaded and executed on the computer, all or a part of the procedures or functions of the terminal or the access network device in FIG. 4 in embodiments of this application are performed.

It may be understood that all or some of the methods in embodiments of this application may be implemented by using software, hardware, firmware, or any other combination. When software is used to implement the methods, all or some of the methods may be implemented in a form of a computer program product.

An embodiment of this application further provides a chip. The chip includes a processor. The processor is coupled to a memory. The processor is configured to execute a computer program or instructions stored in the memory, so that the chip implements a function of the terminal or the access network device in FIG. 4. For example, the chip implements a function of the access network device. The chip may receive information from another module (for example, a radio frequency or an antenna) in the access network device. The information may be sent by the access network device to the terminal. Alternatively, the access network device may send information to another module (for example, a radio frequency or an antenna) in the access network device. The information is sent by the access network device to the terminal.

An embodiment of this application further provides a communication system, including a first communication apparatus and a second communication apparatus.

The first communication apparatus may implement a function of the terminal in FIG. 4. The second communication apparatus may implement a function of the access network device in FIG. 4. For a specific structure of the first communication apparatus or the second communication apparatus, refer to the foregoing descriptions, for example, the structure descriptions in FIG. 9 or FIG. 10.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A communication method, comprising:
sending first indication information, wherein the first indication information indicates backward compatibility information of a first quality of service flow; and
receiving configuration information of a first sidelink radio bearer SLRB, wherein the configuration information of the first SLRB is associated with the first quality of service flow, and the configuration information of the first SLRB is determined based on the backward compatibility information of the first quality of service flow.

2. The method according to claim 1, wherein the configuration information of the first SLRB comprises second indication information, and the second indication information indicates backward compatibility information of the first SLRB.

3. The method according to claim 1, further comprising:
determining backward compatibility information of the first SLRB based on the backward compatibility information of the first quality of service flow.

4. The method according to any one of claims 1 to 3, wherein before the sending the first indication information, the method further comprises:
determining the first indication information based on a transmission profile of the first quality of service flow, wherein the transmission profile of the first quality of service flow indicates the backward compatibility information of the first quality of service flow.

5. The method according to claim 4, further comprising:
obtaining the transmission profile of the first quality of service flow from an upper layer.

6. The method according to any one of claims 1 to 5, further comprising:
establishing the first SLRB based on the configuration information of the first SLRB; and
establishing a second SLRB based on the backward compatibility information of the first quality of service flow and the backward compatibility information of the first SLRB.

7. The method according to claim 6, wherein the establishing the second SLRB based on the backward compatibility information of the first quality of service flow and the backward compatibility information of the first SLRB comprises:
when the backward compatibility information of the first quality of service flow is different from the backward compatibility information of the first SLRB, establishing the second SLRB.

8. The method according to any one of claims 1 to 7, wherein the first SLRB comprises a first logical channel LCH, and the method further comprises:
determining backward compatibility information of a highest-priority LCH of a first destination; and
selecting the first LCH based on the backward compatibility information of the highest-priority LCH of the first destination and backward compatibility information of the first LCH.

9. The method according to claim 8, wherein the selecting the first LCH based on the backward compatibility information of the highest-priority LCH of the first destination and the backward compatibility information of the first LCH comprises:
when the backward compatibility information of the highest-priority LCH of the first destination is the same as the backward compatibility information of the first LCH, selecting the first LCH.

10. The method according to claim 8 or 9, wherein the backward compatibility information of the highest-priority LCH of the first destination and/or the backward compatibility information of the first LCH are/is determined as follows:
based on backward compatibility information comprised in configuration information of the LCH; or
based on backward compatibility information of a quality of service flow associated with the LCH.

11. The method according to any one of claims 8 to 10, wherein after the selecting the first LCH, the method further comprises:
generating a first transport block TB based on the highest-priority LCH of the first destination and the first LCH.

12. The method according to claim 11, further comprising:
when backward compatibility information of at least one of LCHs corresponding to the first TB indicates that backward compatibility is not needed, performing, by the first TB, cross-carrier scheduling and/or SL cross-carrier feedback.

13. The method according to any one of claims 1 to 12, wherein the backward compatibility information indicates that backward compatibility is needed or backward compatibility is not needed.

14. The method according to any one of claims 1 to 13, further comprising:
determining carrier information of the first SLRB based on the backward compatibility information of the first quality of service flow.

15. The method according to claim 14, wherein the first quality of service flow is configured to be mapped to the first SLRB, and the first quality of service flow comprises one or more quality of service flows.

16. The method according to claim 15, wherein when the first quality of service flow comprises one quality of service flow, if backward compatibility information of the quality of service flow is that backward compatibility is needed, the carrier information of the first SLRB is a preset carrier; or
if backward compatibility information of the quality of service flow is that backward compatibility is not needed, the carrier information of the first SLRB is a carrier supported by the quality of service flow.

17. The method according to claim 15, wherein when the first quality of service flow comprises a plurality of quality of service flows, if backward compatibility information of all the plurality of quality of service flows is that backward compatibility is not needed, the carrier information of the first SLRB is a carrier supported by all the plurality of quality of service flows, wherein the carrier supported by all the plurality of quality of service flows is an intersection set of carriers supported by the plurality of quality of service flows; or
if backward compatibility information of one of the plurality of quality of service flows indicates that backward compatibility is needed, the carrier information of the first SLRB is a preset carrier.

18. The method according to claim 16 or 17, wherein the preset carrier is a legacy carrier, a carrier supported by a release 16/release 17 sidelink SL terminal, or a carrier in a carrier list comprised in a system information block SIB 12.

19. The method according to any one of claims 16 to 18, further comprising:
obtaining, from the upper layer, a carrier supported by a quality of service flow.

20. A communication method, comprising:
receiving first indication information, wherein the first indication information indicates backward compatibility information of a first quality of service flow;
determining configuration information of a first sidelink radio bearer SLRB based on the backward compatibility information of the first quality of service flow, wherein the configuration information of the first SLRB is associated with the first quality of service flow; and
sending the configuration information of the first SLRB.

21. The method according to claim 20, wherein the configuration information of the first SLRB comprises second indication information, and the second indication information indicates backward compatibility information of the first SLRB.

22. The method according to claim 20, wherein backward compatibility information of the first SLRB is determined based on the backward compatibility information of the first quality of service flow.

23. The method according to any one of claims 20 to 22, wherein the first indication information is determined based on a transmission profile of the first quality of service flow, and the transmission profile of the first quality of service flow indicates the backward compatibility information of the first quality of service flow.

24. The method according to claim 23, wherein the transmission profile of the first quality of service flow is obtained from an upper layer.

25. The method according to any one of claims 20 to 24, wherein the backward compatibility information indicates that backward compatibility is needed or backward compatibility is not needed.

26. An apparatus, comprising a unit configured to implement the method according to any one of claims 1 to 19.

27. An apparatus, comprising a processor and a memory, wherein the processor is coupled to the memory, and the processor is configured to implement the method according to any one of claims 1 to 19.

28. An apparatus, comprising a processor and an interface circuit, wherein the interface circuit is configured to receive a signal from another apparatus other than the apparatus and transmit the signal to the processor, or send a signal from the processor to another apparatus other than the apparatus, and the processor is configured to implement the method according to any one of claims 1 to 19 by using a logic circuit or by executing code instructions.

29. An apparatus, comprising a unit configured to implement the method according to any one of claims 20 to 25.

30. An apparatus, comprising a processor and a memory, wherein the processor is coupled to the memory, and the processor is configured to implement the method according to any one of claims 20 to 25.

31. An apparatus, comprising a processor and an interface circuit, wherein the interface circuit is configured to receive a signal from another apparatus other than the apparatus and transmit the signal to the processor, or send a signal from the processor to another apparatus other than the apparatus, and the processor is configured to implement the method according to any one of claims 20 to 25 by using a logic circuit or by executing code instructions.

32. A computer-readable storage medium, wherein the computer-readable storage medium stores instructions, and when the instructions are run on a computer, the computer is caused to perform the method according to any one of claims 1 to 19 or the method according to any one of claims 20 to 25.

33. A computer program product, comprising a computer program or instructions, wherein when the computer program or the instructions are run by an apparatus, the method according to any one of claims 1 to 19 or the method according to any one of claims 20 to 25 is performed.

34. A chip, comprising a processor, wherein the processor is coupled to a memory, and is configured to execute a computer program or instructions stored in the memory, to cause the chip to implement the method according to any one of claims 1 to 19 or implement the method according to any one of claims 20 to 25.

35. A communication system, comprising:
a first communication apparatus, wherein the first communication apparatus is configured to perform the method according to any one of claims 1 to 19; and
a second communication apparatus, wherein the second communication apparatus is configured to perform the method according to any one of claims 20 to 25.
